# EUROPEAN PATENT SPECIFICATION

(11) **EP 1 742 501 B1**
(45) Date of publication and mention of the grant of the patent: **17.10.2007**
(21) Application number: 06022416.9
(22) Date of filing: 17.08.1999
(51) Int. Cl.: H04Q 7/38

(54) **Method for processing random access in mobile communication system**
Verfahren zum Verarbeiten eines Zufallszugriffs in einem Mobilkommunikationssystem
Méthode pour le traitement d'accès aléatoire dans un système de communication mobile

(30) Priority: 17.08.1998 KR 19980033313
(43) Date of publication of application: 10.01.2007
(62) Divisional of application: 99116222.3
(73) Proprietor: LG Electronics Inc., Yongdungpo-gu Seoul (KR)
(72) Inventor: Hwang, In Tae, c/o LG Institute, Anyang-si, Gyeonggi-do, 431-749 (KR); Shin, Sang Rim, c/o LG Institute, Anyang-si, Gyeonggi-do, 431-749 (KR); Ok, Myoung Jin, c/o LG Institute, Anyang-si, Gyeonggi-do, 431-749 (KR)
(74) Representative: Urner, Peter

(56) References cited:
- EP-A1- 0 681 406

## Description

### BACKGROUND OF THE INVENTION

### Field of the Invention

The present invention relates to a mobile communications system and, more particularly, to a method for processing a random access in a mobile communications system.

### Discussion of Related Art

Hereinafter, reference will be made in connection with the accompanying drawings as to a description of a method for processing a random access in a mobile communications system according to prior art.

A mobile station attempts a random access to a base station using a random access channel in a random access procedure in order to request the base station for channels.

Here, parameters used for the random access procedure are supplied as information about the system on a broadcasting control channel (BCCH) by the base station.

The mobile station then sets a first timer and continuously generating a random access burst signal at random until an access grant message is received from a layer 3 of the base station.

The reason of this procedure lies in that the mobile station cannot recognize whether the random access burst signal is transmitted to the base station successfully, since it takes much time for the base station to process the random access burst signal and sending the access grant message to the mobile station.

Here, the random access burst signal that the mobile station transmits to the base station contains a mobile ID and channel request information which are generated from the mobile station.

The mobile ID and the channel request information are included in the random access burst signal so that among a plurality of mobile stations transmitting the random access burst signal to the base station, only the mobile station that made random access successfully can receive the access grant message from the mobile station.

Thereafter, the base station processes the random access burst signal received from the mobile station and broadcasting the access grant message to the mobile station.

That is, the base station broadcasts the mobile ID and the information included in the random access burst signal over the access grant message.

The mobile station then compares the mobile ID on the access grant message broadcasted from the base station with the mobile ID of its own. When the mobile ID on the access grant message is identical to that of its own, the random access is considered as successful.

In a case where a plurality of mobile stations has the same mobile ID, the mobile stations performs a contention resolution procedure in a dedicated mode to decide whether the access grant message received is a response to the random access burst signal that they sent to the base station.

The reason that the plural mobile stations has the same mobile ID lies in that the mobile stations generate their mobile ID randomly.

The mobile stations compare information included in the access grant message broadcasted from the base station with information included in the random access burst signal transmitted to the base station by themselves.

If the information included in the access grant message is identical to the information in the random access burst signal, the random access is considered as successful.

In one related art method for processing random access in a mobile communication system disclosed in EP-A-0 681 406, the mobile station requests an uplink channel access utilising a specific time slot and the base station aknowledges the request utilising a specific time slot.

However, in the related art method for processing random access in a mobile communications system, the mobile station repeats a random access to the base station at random for shorter time than is taken for the base station to process the random access signal received from the mobile station and transmit the access grant message to the mobile station. This causes unnecessary power consumption and deterioration of performance in the system.

### SUMMARY OF THE INVENTION

It is therefore an object of the present invention to provide a method of processing a random access in a mobile communication system which improves the random access procedure in a mobile station.

According to one aspect of the invention, there is provided a method of processing a random access in a mobile station, according to claim 1. Further aspects of the invention are set forth in the dependent claims, the following description and drawings.

Accordingly, in one embodiment of the invention there is provided a method for processing an random access in a mobile communications system including the steps of: sending, at a mobile station, a random access burst signal to a base station during the random access; sending, at the base station, an acknowledge signal ACK indicating reception of the random access burst signal to the mobile station; and interrupting, at the mobile station, the random access and waiting for reception of an access grant message, upon receiving the acknowledge signal ACK.

Here, the random access burst signal comprises a control field for controlling the random access.

The control field includes: a termination indicator region indicating whether the signal is a signal processed at an upper layer or a signal processed at a medium access controller (MAC) sublayer; a command/response indicator region indicating whether the signal is a command or a response; and a not required (negative)/required (positive) region indicating whether the signal is a response request signal or the acknowledge signal ACK according to the command or the response.

The acknowledge signal ACK indicating reception of the random access burst signal is converted to a specified format and transmitted at the MAC sublayer of the base station.

In accordance with another aspect of the present invention, there is provided a method for processing a random access in a mobile communications system including the steps of: transitioning, at an MAC sublayer in a mobile station, from an idle mode to a random access mode to convert a random access burst signal to a specified format, and sending the random access burst signal to a base station; converting, at an MAC sublayer in the base station, an acknowledge signal ACK indicating reception of the random access burst signal to a specified format, and sending the acknowledge signal ACK to the mobile station; interrupting, at the MAC sublayer in the mobile station, the random access and transitioning to a wait mode for access grant to wait for an access grant message from the base station, upon receiving the acknowledge signal ACK; and transitioning, at the MAC sublayer in the mobile station, to a dedicated mode to receive a corresponding service, upon receiving the access grant message from the base station.

### BRIEF DESCRIPTION OF THE ATTACHED DRAWINGS

The accompanying drawings, which are included to provide a further understanding of the invention and are incorporated in and constitute a part of this specification, illustrate embodiments of the invention and together with the description serve to explain the principles of the drawings:

In the drawings:
FIGs. 1A and 1B are diagrams illustrating examples of a signal format using a method for processing a random access in a mobile communications system in accordance with the present invention;
FIG. 2 is a diagram illustrating an embodiment of the control field shown in FIGs. 1A and 1B; and
FIG. 3 is a flow chart illustrating a method for processing a random access in a mobile communications system in accordance with the present invention.

### DETAILED DESCRIPTION OF PREFERRED EMBODIMENT

Hereinafter, reference will be made in connection with the accompanying drawings as to a description of a method for processing a random access in a mobile communications system in accordance with a preferred embodiment of the present invention.

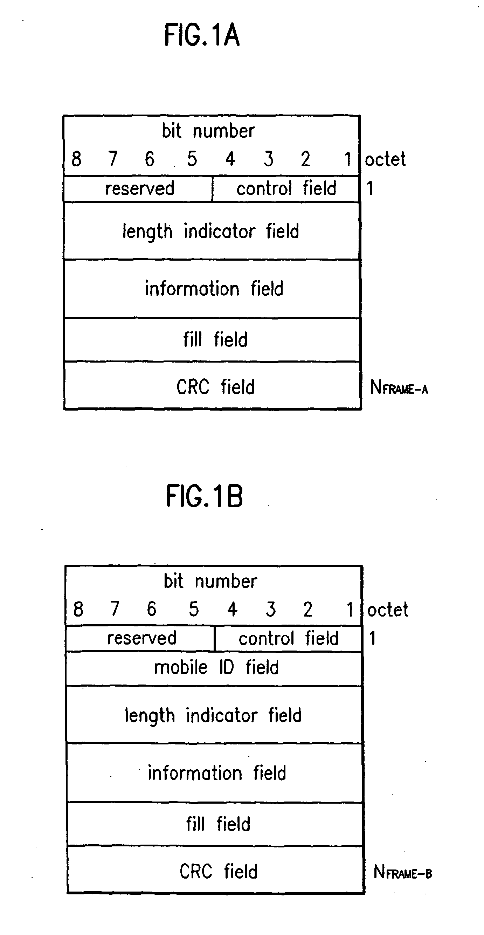

FIGs. 1A and 1B are diagrams illustrating examples of a signal format using a method for processing a random access in a mobile communications system in accordance with the present invention

Referring to FIG. 1A, the signal format comprises reserved field, control field, length indicator field, information field, full field and CRC (Cyclic Redundancy Checking) field. The signal format is used for a broadcast control channel (BCCH), a paging channel (PCH) and a dedicated channel (DCH).

Referring to FIG. 1B, the signal format comprises reserved field, control field, mobile ID field, length indicator field, information field, full field and CRC field. The signal format is used for a reverse access channel (RACH) and a forward access channel (FACH).

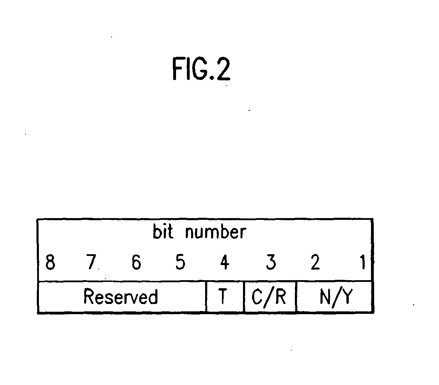

FIG. 2 is a diagram illustrating an example of the control field shown in FIGs. 1A and 1B. The term "bit 4" as used herein represents a termination indicator region, in which "0" indicates that a signal is processed at a higher layer and "1" indicating that the signal is processed at a medium access control (MAC) sublayer.

The term "bit 3" as used herein represents a command/response indicator region, in which "0" indicates a command and "1" indicating a response.

The term "bit 2,1" as used herein represents a not required (negative)/required (positive) region. Here, "00" indicates "response not required" for the command or a negative acknowledge signal NAK for the response, and "11" indicating "response required" for the command and a positive acknowledge signal ACK for the response.

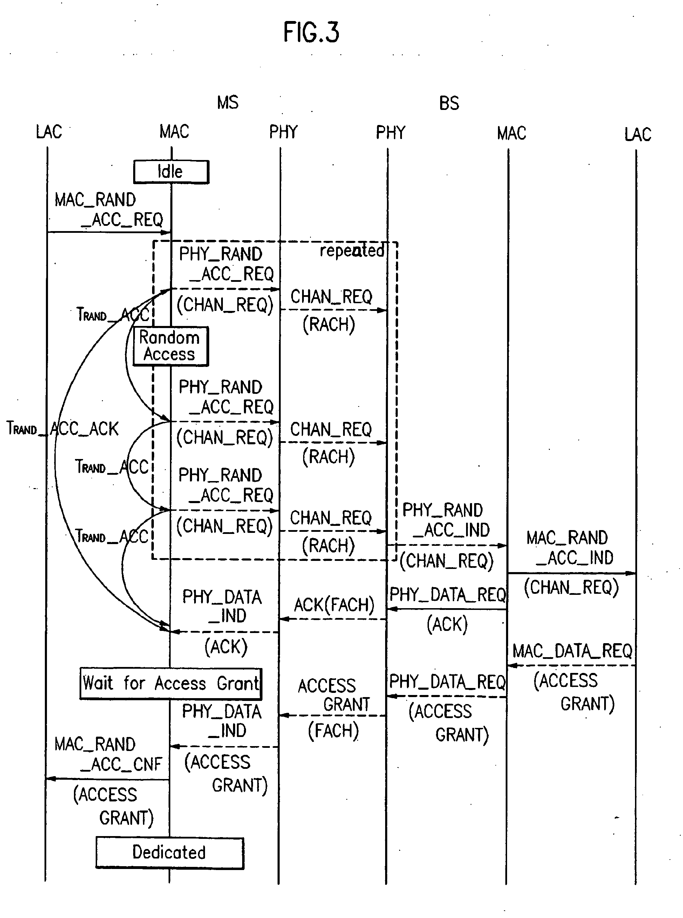

FIG. 3 is a flow chart illustrating an embodiment of a method for processing random access in a mobile communications system according to the present invention.

Now, reference will be made in connection with the accompanying drawings as to a detailed description of the random access processing method in a mobile communications system in accordance with the present invention.

First, in a case where a mobile station layer 3 attempts a random access for channel request to a base station layer 3, a link access controller (LAC) in the mobile station sends a signal MAC_RAND_ACC_REQ with a LAC frame to a MAC supplier according to the signal of the layer 3.

According to the signal MAC_RAND_ACC_REQ, the MAC sublayer transitions from an idle mode to a random access mode to format the signal MAC_RAND_ACC_REQ into the signal format shown in FIG. 1B as includes reserved field, control field, mobile ID field, length indicator field, information field, full field and CRC field. The MAC sublayer sends a signal PHY_RAND_ACC_REQ (CHAN_REQ) with the MAC frame.

Here, the control field in the signal PHY_RAND_ACC_REQ(CHAN_REQ) is formatted as illustrated in FIG. 2.

In the control field, the termination indicator region, bit 4 has "0" indicating that the signal is processed at the higher layer, the command/response indicator region, bit 3 "0" indicating a command, and the not required (negative)/required (positive) region, bits 2,1 "11" indicating a response required.

The number randomly generated from the mobile station is formatted in the mobile ID field and information about the layer 3, i.e., channel request information is formatted in the information field.

The MAC sublayer formats the mobile ID of its own in the mobile ID field, the length of the information field in the length indicator field, information about the layer 3 in the information field, and the full field and the CRC field into a signal PHY_RAND_ACC_REQ(CHAN_REQ). The MAC sublayer sets first and second timers T_{RAND}_ACC and T_{RAND}_ACC_ACK and sending them to a PHY layer through the MAC frame.

The first timer T_{RAND}_ACC is used to perform the random access at random. The second timer T_{RAND}_ACC_ACK is used to prevent the mobile station performing the random access unlimitedly according to the first timer T_{RMD}_ACC before the mobile station receives an ACK signal from the base station in response to the random access burst signal.

The PHY layer processes the signal PHY_RAND_ACC_REQ(CHAN_REQ) transferred from the MAC sublayer into a signal CHAN_REQ and sending the signal CHAN_REQ to the base station through a reverse access channel (RACH).

The base station then examines the random access burst signal transmitted from the mobile station through the reverse access channel (RACH). If there is no error in the random access burst signal, the base station sends an acknowledge signal ACK and an access grant message to the mobile station. With an error in the random access burst signal, the base station sends a negative acknowledge signal NAK to the mobile station to request the random access burst signal again.

That is, the base station PHY layer processes the random access burst signal CHAN_REQ received from the PHY layer at the mobile station into a signal PHY_RAND_ACC_IND(CHN_REQ) and sending the signal PHY_RAND_ACC_IND(CHN_REQ) to the MAC sublayer with the MAC frame.

The MAC sublayer examines the control field in the signal PHY_RAND_ACC_IND(CHN_REQ) and recognizing that the signal PHY_RAND_ACC_IND(CHN_REQ) is a response-required (from "l1" of the not required (negative)/required (positive) region) command (from "0" of the command/response indicator region) processed at the higher layer (from "0" of the termination indicator region).

The MAC sublayer also recognizes the mobile ID from the mobile ID field in the signal PHY_RAND_ACC_IND(CHN_REQ) and information about the layer 3 of the mobile station from the information field. The MAC sublayer examines the CRC field in the signal PHY_RAND_ACC_IND(CHN_REQ) to determine whether there is an error in the random access burst.

Without an error in the random access burst signal, the MAC sublayer formats the control field of a signal PHY_DATA_REQ(ACK) as illustrated in FIG. 1B and processing the signal through the PHY layer. The MAC sublayer then transmits an acknowledge signal ACK to the mobile station on a forward access channel (FACH), thereby indicating that the base station received the random access burst signal successfully. The MAC sublayer also processes the information of the information field into a signal MAC_RAND_ACC_IND(CHAN_REQ) and sending the signal to the LAC with the MAC frame.

If there is an error in the random access burst signal, the MAC sublayer formats the control field of the signal PHY_DATA_REQ(ACK) as illustrated in FIG. 1B and processing the signal through the PHY layer. The MAC sublayer then transmits the processed signal to the mobile station on the forward access channel (FACH) as a signal requesting the mobile station to transmit the random access burst signal again.

That is, in a case where there is no error in the random access burst signal, the base station MAC sublayer formats the control field in the signal PHY_DATA_REQ(ACK). Here, the termination indicator region, bit 4 has "1", the command/response indicator region, bit 3 "1", and the not required (negative)/required (positive) region, bit 2,1 "l1" indicating an acknowledge signal ACK for the response, bit 3. The MAC sublayer also formats the mobile ID field in the signal PHY_DATA_REQ(ACK) to indicate the mobile ID as determined above and the information field to indicate information about the mobile station layer 3. The formatted signal PHY_DATA_REQ(ACK) is transmitted to the PHY layer with the MAC frame.

The PHY layer processes the signal PHY_DATA_REQ(ACK) and sending the acknowledge signal ACK to the mobile station on the forward access channel (FACH).

Thereafter, the mobile station resets the first and second timers T_{RAND}_ACC and T_{RAND}_ACC_ACK according to the acknowledge signal ACK received from the base station on the forward access channel (FACH) to interrupt the random access. The mobile station examines the acknowledge signal ACK and performing a corresponding operation.

That is, the mobile station PHY layer processes the acknowledge signal ACK received from the base station on the forward access channel (FACH) and sending a signal PHY_DATA_IND(ACK) to the MAC sublayer with the MAC frame.

The MAC sublayer then examines the control field in the signal PHY_DATA_IND(ACK) and recognizing that the signal PHY_DATA_IND(ACK) is an acknowledge signal ACK indicating a response processed at the MAC sublayer. The MAC sublayer also recognizes the mobile ID and the information about the mobile station from the mobile ID field and the information field in the signal PHY_DATA_IND(ACK).

The MAC sublayer compares the mobile ID recognized from the acknowledge signal ACK with the mobile ID of its own. When the mobile ID recognized from the acknowledge signal ACK is identical to the mobile ID of its own, the MAC sublayer performs a contention resolution procedure to compare the information recognized from the acknowledge signal ACK with the information of its own.

When the information recognized from the acknowledge signal ACK is identical to the information of its own, the MAC sublayer transitions from the random access mode to a wait mode for access grant.

On the other hand, if there is an error in the random access burst signal, the MAC sublayer at the base station formats the control field of the negative acknowledge signal NAK. Here, the termination indicator region, bit 4 has "1" indicating that the signal is processed at the MAC sublayer, the command/response indicator region, bit 3 "1" indicating a response, and the not required (negative)/required (positive) region, bit 2,1 "00" indicating a negative acknowledge signal NAK for the response, bit 3. The MAC sublayer also formats the mobile ID field in the signal PHY_DATA_REQ(NAK) to indicate the mobile ID as determined above and the information field to indicate information about the mobile station layer 3. The signal PHY_DATA_REQ(NAK) thus formatted is sent to the PHY layer with the MAC frame.

The PHY layer processes the signal PHY_DATA_REQ(NAK) and sending the negative acknowledge signal NAK to the mobile station on the forward access channel (FACH).

Thereafter, the mobile station resets the first and second timers T_{RAND}_ACC and T_{RAND}_ACC_ACK according to the negative acknowledge signal NAK received from the base station on the forward access channel (FACH) to interrupt the random access. The mobile station examines the negative acknowledge signal NAK and performing a corresponding operation.

That is, the PHY layer at the mobile station processes the negative acknowledge signal NAK received from the base station on the forward access channel (FACH) and sending a signal PHY_DATA_IND(NAK) to the MAC sublayer through the MAC frame.

Then, the MAC sublayer examines the control field in the signal PHY_DATA_IND(NAK) and recognizing that the signal PHY_DATA_IND(NAK) is a negative acknowledge signal NAK indicating a response processed at the MAC sublayer. The MAC sublayer also recognizes the mobile ID and the information about the mobile station from the mobile ID field and the information field in the signal PHY_DATA_IND(NAK).

The MAC sublayer sets the first and second timers according to the negative acknowledge signal NAK and sending the random access burst to the mobile station again.

On the other hand, in a case where there is no error in the random access burst signal, the LAC at the base station sends the information about the mobile station to the upper layer according to the signal MAC_RAND_ACC_IND(CHAN_REQ) received from the MAC sublayer and sending a signal MAC_DATA_REQ(ACCESS_GRANT) processed at the upper layer to the MAC sublayer.

The MAC sublayer then processes the signal MAC_DATA_REQ(ACCESS_GRANT) received from the LAC into a signal PHY_DATA_REQ(ACCESS_GRANT) and sending the signal PRY_DATA_REQ(ACCESS_GRANT) to the PHY layer through the MAC frame.

The PHY layer processes the signal PHY_DATA_REQ(ACCESS_GRANT) received from the MAC sublayer into a signal ACCESS_GRANT and sending the signal ACCESS_GRANT to the mobile station on the forward access channel (FACH).

Then, the mobile station in the wait mode for access grant transitions to a dedicated mode according to the signal ACCESS_GRANT received from the base station on the forward access channel (FACH) and receiving the corresponding service from the base station.

That is, the PHY layer at the mobile station processes the signal ACCESS_GRANT received from the base station and sending the resulting signal PRY_DATA_IND(ACCESS_GRANT) to the MAC sublayer. The MAC sublayer transmits a signal MAC_RAND_ACC_CNF(ACCESS_GRANT) to the LAC through the MAC frame according to the signal PRY_PATA_IND(ACCESS_GRANT) received from the PHY layer. The MAC sublayer transitions to the dedicated mode to receive the corresponding service from the base station.

As described above, in the random access processing method in a mobile communications system according to the present invention, the base station immediately transmits an acknowledge signal ACK in response to the random access signal received from the mobile station so that the mobile station does not attempt unnecessary random accesses, thereby reducing power consumption and enhancing efficiency of the system.

It will be apparent to those skilled in the art that various modifications and variations can be made in the present invention without departing from the scope of the invention. Thus, it is intended that the present invention cover the modifications and variations of this invention provided they come within the scope of the appended claims.

## Claims

1. A method of processing a random access in a mobile station (MS), comprising:
the mobile station (MS) performing a random access repeatedly wherein a random access signal (CHAN_REQ) is sent to a base station (BS) during the random access; and
preventing the mobile station (MS) from performing the random access unlimitedly upon receiving, from the base station (BS), an acknowledge signal (ACK) indicating reception of the random access signal (CHAN_REQ) thereby giving the base station (BS) the time to process the random access signal (CHAN_REQ).

2. The method of claim 1, further comprising:
delivering, at the mobile (MS), a channel request signal (PHY_RAND_ACC_REQ) from a medium access control layer (MAC) to a physical layer (PHY) upon receiving a random access request signal (MAC_RAND_ACC_REQ) from a higher layer; and
processing the channel request signal (PHY_RAND_ACC_REQ) into the random access signal (CHAN_REQ) and sending the random access signal (CHAN_REQ) to the base station.

3. The method of claim 2, wherein the higher layer is a link access control layer (LAC).

4. The method of claim 1, further comprising:
setting a first predefined time period (T_{RAND_}ACC) and a second predefined time period (T_{RAND_}ACC_{_}ACK);
transmitting a plurality of random access signals (CHAN_REQ) to the base station (BS) wherein a random access signal (CHAN_REQ) is transmitted according to the first predefined time period (T_{RAND_}ACC) ; and
terminating further transmissions of the random access signals (CHAN_REQ) after expiration of the second predefined time period (T_{RAND_}ACC_ACK), wherein said second predefined time period (T_{RAND_}ACC_{_}ACK) expires before the mobile station (MS) receives the acknowledge signal (ACK) from the base station (BS).

5. The method of claim 4, wherein the mobile station (BS) resets the first time period (T_{RAND_}ACC) and the second time period (T_{RAND_}ACC_{_}ACK) after receipt of the acknowledge signal (ACK) to interrupt the random access.

6. The method of claim 1, further comprising:
transmitting, to the base station (BS), a plurality of random access signals (CHAN_REQ) each of which includes an identification number randomly selected by the mobile station (MS); and
terminating further transmission of the random access signals (CHAN_REQ) upon receiving an acknowledge signal (ACK) which indicates successful reception of the random access signal (CHAN_REQ), wherein the acknowledge signal (ACK) includes the identification number.

7. The method of claim 6, wherein the identification number is a mobile ID of the mobile station (MS).

## Patentansprüche

1. Verfahren zum Verarbeiten eines Zufallszugriffs in einer Mobilstation (MS), das umfasst:
wiederholtes Ausführen eines Zufallszugriffs durch die Mobilstation (MS), bei dem ein Zufallszugriffssignal (CHAN_REQ) während des Zufallszugriffs zu einer Basisstation (BS) geschickt wird; und
Verhindern, dass die Mobilstation (MS) den Zufallszugriff unbegrenzt ausführt, wenn von der Basisstation (BS) ein Quittierungssignal (ACK) empfangen wird, das den Empfang des Zufallszugriffssignals (CHAN_REQ) angibt, wodurch der Basisstation (BS) Zeit gegeben wird, das Zufallszugriffssignal (CHAN_REQ) zu verarbeiten.

2. Verfahren nach Anspruch 1, das ferner umfasst:
in der Mobilstation (MS) Liefern eines Kanalanforderungssignals (PHY_RAND_ACC_REQ) von einer Mediumzugriffs-Steuerschicht (MAC) zu einer physikalischen Schicht (PHY), wenn ein Zufallszugriffs-Anforderungssignal (MAC_RAND_ACC_REQ) von einer höheren Schicht empfangen wird; und
Verarbeiten des Kanalanforderungssignals (PHY_RAND_ACC_REQ) in das Zufallszugriffssignal (CHAN_REQ) und Schicken des Zufallszugriffssignals (CHAN_REQ) zu der Basisstation.

3. Verfahren nach Anspruch 2, bei dem die höhere Schicht eine Leitungszugriffs-Steuerschicht (LAC) ist.

4. Verfahren nach Anspruch 1, das ferner umfasst:
Setzen einer ersten im Voraus definierten Zeitdauer (T_{RAND_}ACC) und einer zweiten im Voraus definierten Zeitdauer (T_{RAND_}ACC_ACK);
Senden mehrerer Zufallszugriffssignale (CHAN_REQ) zu der Basisstation (BS), wobei ein Zufallszugriffssignal (CHAN_REQ) in Übereinstimmung mit der ersten im Voraus definierten Zeitdauer (T_{RAND_}ACC) gesendet wird; und
Beenden eines weiteren Sendens des Zufallszugriffssignals (CHAN_REQ) nach Ablauf der zweiten, im Voraus definierten Zeitdauer (T_{RAND_}ACC_ACK), wobei die zweite im Voraus definierte Zeitdauer (T_{RAND_}ACC_ACK) abläuft, bevor die Mobilstation (MS) das Quittierungssignal (ACK) von der Basisstation (BS) empfängt.

5. Verfahren nach Anspruch 4, bei dem die Mobilstation (BS) die erste Zeitdauer (T_{RAND_}ACC) und die zweite Zeitdauer (T_{RAND_}ACC_{_}ACK) nach dem Empfang des Quittierungssignals (ACK) zurücksetzt, um den Zufallszugriff zu unterbrechen.

6. Verfahren nach Anspruch 1, das ferner umfasst:
Senden mehrerer Zufallszugriffssignale (CHAN_REQ) zu der Basisstation (BS), wobei jedes Zufallszugriffssignal eine Identifizierungsnummer enthält, die durch die Mobilstation (MS) zufällig ausgewählt wird; und
Beenden einer weiteren Übertragung der Zufallszugriffssignale (CHAN_REQ) bei Empfang eines Quittierungssignals (ACK), das einen erfolgreichen Empfang des Zufallszugriffssignals (CHAN_REQ) angibt, wobei das Quittierungssignal (ACK) die Identifizierungsnummer enthält.

7. Verfahren nach Anspruch 6, bei dem die Identifizierungsnummer eine Mobil-ID der Mobilstation (MS) ist.

## Revendications

1. Procédé de traitement d'un accès aléatoire pour une station mobile (MS), consistant à :
procéder à l'exécution par la station mobile (MS) d'un accès aléatoire de façon répétée, dans lequel un signal d'accès aléatoire (CHAN_REQ) est envoyé à une station de base (BS) au cours de l'accès aléatoire ; et
empêcher la station mobile (MS) d'exécuter l'accès aléatoire de façon illimitée lors de la réception, à partir de la station de base (BS), d'un signal d'accusé de réception (ACK) indiquant la réception du signal d'accès aléatoire (CHAN_REQ) , donnant ainsi à la station de base (BS) le temps de traiter le signal d'accès aléatoire (CHAN_REQ).

2. Procédé selon la revendication 1, comprenant en outre les étapes consistant à :
délivrer au mobile (MS), un signal de requête de canal (PHY_RAND_ACC_REQ) d'une couche de contrôle d'accès au support (MAC) à une couche physique (PHY) lors de la réception d'un signal de requête d'accès aléatoire (MAC_RAND_ACC_REQ) depuis une couche supérieure ; et
traiter le signal de requête de canal (PHY_RAND_ACC_REQ) dans le signal d'accès aléatoire (CHAN_REQ) et envoyer le signal d'accès aléatoire (CHAN_REQ) à la station de base.

3. Procédé selon la revendication 2, dans lequel la couche supérieure est une couche de contrôle d'accès de liaison (LAC).

4. Procédé selon la revendication 1, comprenant en outre les étapes consistant à :
définir une première période prédéfinie (T_{RAND_}ACC) et une seconde période prédéfinie (T_{RAND_}ACC_ACK);
transmettre une pluralité de signaux d'accès aléatoire (CHAN_REQ) à la station de base (BS) de sorte qu'un signal d'accès aléatoire (CHAN_REQ) est émis conformément à la première période prédéfinie (T_{RAND_}ACC) ; et
terminer les transmissions plus avant des signaux d'accès aléatoire (CHAN_REQ) après l'expiration de la seconde période prédéfinie (T_{RAND}_ACC_ACK), où ladite seconde période prédéfinie (T_{RAND}_ACC_ACK) expire avant que la station mobile (MS) reçoive le signal d'accusé de réception (ACK) depuis la station de base (BS).

5. Procédé selon la revendication 4, dans lequel la station mobile (BS) réinitialise la première période (T_{RAND_}ACC) et la seconde période (T_{RAND_}ACC_{_}ACK) après réception du signal d'accusé de réception (ACK) pour interrompre l'accès aléatoire.

6. Procédé selon la revendication 1, comprenant en outre les étapes consistant à :
transmettre, à la station de base (BS), une pluralité de signaux d'accès aléatoire (CHAN_REQ) dont chacun comprend un numéro d'identification sélectionné de manière aléatoire par la station mobile (MS) ; et
terminer la transmission plus avant des signaux d'accès aléatoire (CHAN_REQ) lors de la réception d'un signal d'accusé de réception (ACK) qui indique une réception correcte du signal d'accès aléatoire (CHAN_REQ), où le signal d'accusé de réception (ACK) comprend le numéro d'identification.

7. Procédé selon la revendication 6, dans lequel le numéro d'identification est un ID de mobile de la station mobile (MS).
